# EUROPÄISCHE PATENTSCHRIFT

(11) **EP 2 644 337 B1**
(45) Veröffentlichungstag und Bekanntmachung des Hinweises auf die Patenterteilung: **12.03.2014**
(21) Anmeldenummer: 13160814.3
(22) Anmeldetag: 25.03.2013
(51) Int. Cl.: B26D 7/30, B26D 5/34, B26D 5/00, B26D 7/06

(54) **Verfahren und Vorrichtung zum gewichtsgenauen Schneiden eines Lebensmittelstrangs**
Method and apparatus for cutting a length of food to a precise weight
Procédé et dispositif de découpage d'un produit alimentaire en tranches de poids précis

(30) Priorität: 27.03.2012 DE 102012102649
(43) Veröffentlichungstag der Anmeldung: 02.10.2013
(73) Patentinhaber: Reifenhäuser, Uwe, 57632 Flammersfeld (DE)
(72) Erfinder: Reifenhäuser, Uwe, 57632 Flammersfeld (DE)
(74) Vertreter: Bauer, Dirk

(56) Entgegenhaltungen:
- EP-A1- 1 044 770
- EP-A1- 1 046 478
- EP-A2- 0 871 008
- WO-A1-2011/015284
- GB-A- 2 377 362

## Beschreibung

Die Erfindung betrifft ein Verfahren zum gewichtsgenauen Schneiden eines Lebensmittelstrangs in Portionen mit den folgenden Verfahrensschritten:
a) Der Lebensmittelstrang wird mittels einer Vorschubeinrichtung in Vorschubrichtung relativ zu einem Maschinengestell auf eine Schneideinrichtung zu vorgeschoben, wobei eine Längsachse des Lebensmittelstrangs parallel zu der Vorschubrichtung verläuft.
b) Fortlaufend während des Vorschiebens wird mittels einer Messeinrichtung an - in Richtung der Längsachse des Lebensmittelstrangs betrachtet - verschiedenen Stellen des die Messeinrichtung passierenden Lebensmittelstrangs dessen jeweilige Querschnittsfläche bestimmt, wobei
c) mittels einer relativ zu dem Maschinengestell feststehenden Markiereinrichtung der Messeinrichtung teilweise durch eine Übergangsfuge zwischen bei aufeinander folgenden Förderbandteilen hindurch auf einer Oberfläche des Lebensmittelstrangs fortlaufend eine Markierung erzeugt wird, die sich infolge einer Vorschubbewegung des Lebensmittelstrangs in Richtung von dessen Längsachse relativ zu dem Lebensmittelstrang bewegt.
d) Mittels dreier, jeweils zu dem Maschinengestell feststehender Detektoren wird die aktuelle Markierung wiederum teilweise durch die Übergangsfuge zwischen bei aufeinander folgenden Förderbandteilen hindurch aus unterschiedlichen Blickwinkeln fortlaufend erfasst, wobei die Detektoren - in Vorschubrichtung betrachtet - auf derselben Seite der Markierung angeordnet sind.
e) Mittels einer Auswerteeinrichtung der Messeinrichtung wird aus von den Detektoren erzeugten Bilddaten fortlaufend die jeweils aktuelle Größe der Querschnittsfläche ermittelt.
f) Unter Verwendung der Daten bezüglich der aktuellen Größe der Querschnittsfläche werden von einer Steuereinrichtung die Schneideinrichtung und die Vorschubeinrichtung so angesteuert, dass sukzessive gewichtsgenaue Portionen von einem vorderen Ende des Lebensmittelstrangs abgeschnitten werden.

Außerdem betrifft die Erfindung eine zugehörige Vorrichtung zum gewichtsgenauen Schneiden eines Lebensmittelstrangs in Portionen mit
- einer Vorschubeinrichtung, mit der der Lebensmittelstrang in Vorschubrichtung vorschiebbar ist, wobei eine Längsachse des Lebensmittelstrangs während der Vorschubbewegung parallel zu der Vorschubrichtung ausgerichtet ist,
- eine Schneideinrichtung, auf die der Lebensmittelstrang mittels der Vorschubeinrichtung vorschiebbar ist,
- einer Messeinrichtung, mit der fortlaufend während des Vorschiebens an - in Richtung der Längsachse des Lebensmittelstrangs betrachtet - verschiedenen Stellen des die Messeinrichtung passierenden Lebensmittelstrangs, dessen Querschnittsfläche bestimmbar ist,
- einer Markiereinrichtung der Messeinrichtung, wobei mittels der Markiereinrichtung teilweise durch eine Übergangsfuge zwischen bei aufeinander folgenden Förderbandteilen hindurch auf einer Oberfläche des Lebensmittelstrangs fortlaufend eine Markierung erzeugbar ist, die sich infolge einer Vorschubbewegung in Richtung der Längsachse des Lebensmittelstrangs relativ zu dem Lebensmittelstrang bewegt,
- drei Detektoren der Messeinrichtung, wobei mittels der Detektoren jeweils die aktuelle Markierung wiederum teilweise durch eine Übergangsfuge zwischen bei aufeinander folgenden Förderbandteilen hindurch aus unterschiedlichen Blickwinkeln fortlaufend erfassbar ist, wobei die Detektoren - in Vorschubrichtung betrachtet - auf derselben Seite der Markierung angeordnet sind,
- eine Auswerteeinrichtung der Messeinrichtung, wobei mittels der Auswerteeinrichtung aus von den Detektoren erzeugte Bilddaten fortlaufend die jeweils aktuelle Größe der Querschnittsfläche ermittelbar ist,
- einer Steuereinrichtung, mit der unter Verwendung der Daten bezüglich der aktuellen Querschnittsfläche die Schneideinrichtung und/oder die Vorschubeinrichtung so ansteuerbar sind, dass sukzessive gewichtsgenaue Portionen von einem vorderen Ende eines Lebensmittelstrangs abschneidbar sind.

### Stand der Technik

Ein Verfahren und eine Vorrichtung der eingangs beschriebenen Art sind z.B. aus der GB 2 377 362 A bekannt. Sie sind insbesondere im Hinblick auf das so genannte "gewichtsgenaue Schneiden" elementar, da unregelmäßig geformte (meist "natürlich gewachsene) Lebensmittelstränge (zum Beispiel Kotelettstränge) typischerweise in einzelne Scheiben aufgeschnitten werden sollen, die eine möglichst einheitliche Masse aufweisen sollen. Diese Vorgabe ist für die Erzeugung gleicher Packungsgewichte im Rahmen des Verkaufs der Produkte beispielsweise im Selbstbedienungsbereich in Supermärkten von Interesse.

Bei dem in der GB 2 377 362 A offenbarten Verfahren wird in einer senkrecht zu der Vorschubrichtung ausgerichteten Projektionsebene mittels vier, im Umfangsrichtung um jeweils 90° versetzt angeordneten Lasern eine Markierung auf der Oberfläche des zu schneidenden Lebensmittelstrangs erzeugt. Diese Markierung wird mit drei Kameras, von denen zwei oberhalb der von einer Übergangsfuge (Spaltbereich) getrennten Förderbandteile und eine unterhalb davon angeordnet sind bzw. ist, erfasst. Die drei Kameras und deren optische Achsen sind innerhalb derselben Ebene, d.h. der Projektionsebene, angeordnet, in der auch die Markierung mittels der vier Laser erzeugt wird.

Dieses System liefert im mittleren Bereich des Lebensmittelstrangs befriedigende Ergebnisse (insbesondere wenn die Oberfläche relativ glatt ist) und erlaubt in diesem Fall mit vertretbarer Rechenleistung auch bei höheren Vorschubgeschwindigkeiten und geringen Abständen zwischen der Projektionsebene und der späteren Schneidebene einen kontinuierlichen Vermessungs- und Schneidbetrieb. Schwachstellen besitzt das bekannte System jedoch bei der Vermessung von Endstücken sowie von unregelmäßigen Oberflächenkonturen, vor allem mit schräg in den Lebensmittelstrang sich hinein erstreckenden Aushöhlungen. Hier treten insbesondere bei unregelmäßig konvex gekrümmten Endstücken sowie Aushöhlungen mit kleinen Krümmungsradien Verschattungen auf, die das von den Lasern erzeugte Muster durch die Kameras nicht zuverlässig erkennen lassen.

Beispielsweise die DE 101 36 809 A1 beschreibt darüber hinaus ebenfalls die dieser Anmeldung zugrunde liegende Technik, wobei jeweils ein Lichtemitter sowie eine Kamera zum Einsatz kommen. Mittels des Emitters, beispielsweise eines Lasers, wird Licht auf den Lebensmittelstrang projiziert, so dass durch Reflexion eine optische Randkontur auf den Lebensmittelstrang entsteht. Das Licht wird dabei so auf den Lebensmittelstrang geworfen, dass diese Kontur senkrecht zu einer Vorschubrichtung desselben verläuft. Die Randkontur kann daraufhin mittels der Kamera aufgenommen und anschließend von einer Prozessoreinheit ausgewertet werden, wobei eine Querschnittsfläche des Lebensmittelstrangs bestimmt werden kann. Bei Kenntnis einer mittleren Dichte des Lebensmittelstrangs kann auf diese Weise schließlich errechnet werden, bei welcher Schneiddicke die von dem Lebensmittelstrang abzutrennende Scheibe möglichst genau eine zuvor definierte Masse aufweist.

In Anlehnung an dieses Verfahren zeigt die WO 02/061368 A2 eine Vorrichtung, die ebenfalls einen Emitter sowie eine Kamera zur Bestimmung einer Querschnittsfläche eines Lebensmittelstrangs nutzt. Diese Anmeldung beschäftigt sich insbesondere mit dem Problem, dass eine zuverlässige Bestimmung der Randkontur beziehungsweise der Fläche des Lebensmittelstrangs in solchen Fällen nicht ohne weiteres möglich ist, in denen der Lebensmittelstrang eine stark unregelmäßige Struktur aufweist, wie dies beispielsweise bei Kotelettsträngen der Fall sein kann. Unregelmäßigkeiten führen insbesondere zu dem Problem der Verschattung einzelner Bereiche, sobald das von dem Lichtemitter emittierte Licht aufgrund der unregelmäßigen Form des Lebensmittelstrangs nicht jede Stelle der des Querschnitts erreichen kann und die Randkontur in diesen Bereichen folglich "verschwindet". Messfehler und unzureichende Genauigkeit der Massen der einzelnen Scheiben sind die Folge. Zur Lösung dieser Problematik schlägt die WO 02/061368 A2 die Anordnung von Spiegeln vor, die um den Lebensmittelstrang herum angeordnet sind und mittels derer der Lebensmittelstrang von unterschiedlichen Betrachtungspunkten aus betrachtet werden kann. Die Spiegel wirken dabei sowohl für das vom Lichtemitter ausgesandte Licht als auch für die Kamera, die die auf dem Lebensmittelstrang erzeugte Randkontur erfassen soll.

Eine alternative Möglichkeit zur möglichst genauen Bestimmung selbst komplexer Querschnittsgeometrien beziehungsweise zur Bestimmung der sich daraus ergebenden Querschnittsflächen eines Lebensmittelstrangs bieten beispielsweise die Vorrichtungen der Typen IPM 3 X300 und I-Cut 36 des Unternehmens Marel hf. Insbesondere letztgenanntes Model nutzt anstelle von Spiegeln drei Kameras, um eine Verschattung der mittels eines Lasers auf den Lebensmittelstrang projizierten Randkontur zu vermeiden. In Vorschubrichtung des Lebensmittelstrangs betrachtet werden dabei zwei der drei Kameras aus einer schräg unteren Position unterhalb des Lebensmittelstrangs positioniert, während die dritte Kamera oberhalb des Lebensmittelstrangs angeordnet ist. Die "Blickrichtungen" der Kameras sind in Vorschubrichtung des Lebensmittelstrangs gerichtet, das heißt die Kameras sind in Vorschubrichtung des Lebensmittelstrangs betrachtet "vor" der mittels des Lichtemitters erzeugten Randkontur angeordnet und beobachten diese. Durch die Anordnung von drei um den Lebensmittelstrang herum angeordnete Kameras kann die Randkontur auf dem Lebensmittelstrang verhältnismäßig zuverlässig beobachtet werden, wobei Verschattungen und infolge dessen ungenaues Schneiden reduziert werden.

Zwar liefert diese Vorrichtung für einige Anwendungsfälle zufrieden stellende Genauigkeit hinsichtlich der Massenabweichung der einzelnen Scheiben des Lebensmittelstrangs, eine sichere Vermeidung von Verschattungen der Randkontur, die dazu führt, dass diese nicht von den Kameras einsehbar und registriebar ist, kann jedoch auch mittels dieser Vorrichtung nicht in allen Fällen sicher gewährt werden.

Aus der DE 600 34 332 T2 ist ferner eine Schneidmaschine mit automatischer Abtastung des Lebensmittelstrangs bekannt. Auch bei dieser Maschine findet die Vermessung der Querschnittsfläche, d.h. die Berechnung der Scheibendicken, kontinuierlich während des Vorschub- und Schneidbetriebs statt. Das Produkt wird allerdings während des Vorschubs in der Messeinrichtung mit Hilfe stirnseitig angreifender Förderfinger über dünne horizontale Stützstäbe geschoben. Sowohl die Erzeugung der Markierung mittels zweier Laser als auch das Detektieren der Markierung mittels zweier Kameras erfolgt somit ohne Behinderungen durch Förderbandteile, die lediglich einen Spaltbereich zwischen sich freilassen, um von unten die Oberfläche des Lebensmittelstrangs zu erreichen. Ein Markierungslaser und eine zugehörige Kamera sind oberhalb der als Auflage für den Lebensmittelstrang dienenden Stützstäbe angeordnet und ein weiterer Markierungslaser nebst zugehöriger Kamera unterhalb der Stützstäbe. Die Ergebnisse der Vermessung von der Unterseite her sind entsprechend schlecht, da durch die Mehrzahl der Stützstäbe die Markierung auf dem Lebensmittelstrang unvollständig ist, so dass für verschattete Bereiche Interpolationsvorgänge erforderlich sind, die sich negativ auf die Genauigkeit auswirken. Aufgrund der nur zwei Kameras sind darüber hinaus Unregelmäßigkeiten an den vertikal ausgerichteten Seitenflächen ebenfalls entsprechend unvollkommen erfassbar.

Schließlich offenbaren die EP 1 044 770 A1 und die EP 1 046 478 A1 noch jeweils ein Verfahren und eine Vorrichtung zum Trennen einzelner Teilstücke vorgebbaren Gewichts von einem geräucherten Schinkenstück. Die Vermessung des Lebensmittelstrangs, insbesondere die Bestimmung seiner Querschnittsfläche über seine Ausdehnung in Vorschubrichtung, erfolgt auf einem Messtisch, auf dem das Produkt während der Vermessung stillsteht. Dabei wird das Produkt gemäß der EP 1 044 770 A1 während der Messung von dünnen Drähten gehalten, wohingegen es sich gemäß der EP 1 046 478 A1 auf einer durchsichtigen Glasplatte befindet. In beiden Fällen sind sowohl Markierungslaser als auch Kameras zur Detektion der Markierung auf der Schinkenoberfläche vorhanden, und zwar jeweils mehrere Markierungslaser und Kameras, die von oben auf das Lebensmittelstück gerichtet sind, als auch mehrere Markierungslaser und Kameras, die von unten auf das Lebensmittelstück gerichtet sind. Dabei wirken jeweils ein Markierungslaser (Projektor) und eine Kamera als Paar miteinander zusammen. Aufgrund des stillstehenden Lebensmittelstücks während der Messung verbleibt hinreichend Zeit, um die Vielzahl der erzeugten Bilder mittels eines Computers auszuwerten, um die Kontur des Lebensmittelstücks zu bestimmen. Für ein Verfahren, bei dem fortlaufend bei nicht unterbrochenem Vorschub die Messung und Auswertung der gewonnenen Messdaten erfolgen muss, um rechtzeitig vor Erreichen der Schneidebene die erforderliche Scheibendicke bestimmen und einstellen zu können, ist diese bekannte Projektor- und Kameratechnik und -anordnung nicht geeignet.

### Aufgabe

Im Rahmen der vorliegenden Erfindung soll schließlich eine Vorrichtung und ein Verfahren der eingangs beschriebenen Art dahingehend verbessert werden, dass ein gewichtsgenaues Schneiden einzelner Scheiben des Lebensmittelstrangs gegenüber dem Stand der Technik präziser wird.

### Lösung

Die zugrunde liegende Aufgabe wird ausgehend von dem Verfahren der eingangs beschriebenen Art erfindungsgemäß dadurch gelöst, dass die aktuelle Markierung fortlaufend auch aus einem weiteren Blickwinkel von einem vierten Detektor erfasst wird, der - in Vorschubrichtung betrachtet - auf der - im Vergleich mit den drei anderen Detektoren - gegenüberliegenden Seite der Markierung angeordnet ist.

Mittels dieses erfindungsgemäßen Verfahrensschritts ist die Aufgabe insofern besonders gut lösbar, als dass der zusätzliche vierte Detektor es durch seine Stellung auf der im Vergleich zu den übrigen drei Detektoren "anderen" Seite der Markierung ermöglicht, auch solche Bereiche zu erfassen, die für die anderen drei bekannten Detektoren nicht einsehbar sind.

Solche Bereiche werden insbesondere in Randbereichen von unregelmäßig geformten Lebensmittelsträngen gebildet. Beispielsweise kommt es regelmäßig vor, dass ein vorderer und/oder hinterer Randbereich eines Lebensmittelstrangs unter einem besonders steilen Winkel zuläuft, das heißt, eine "Endebene" des Lebensmittelstrangs gegen eine senkrechte, zur Vorschubrichtung senkrechtechte Ebene um einen kleinen Winkel, beispielsweise 10°, geneigt, d.h. verdreht ist. Sobald ein solcher Randbereich in eine die Markierung bildende Projektionsebene der Markiereinrichtung "einfährt" beziehungsweise mittels der Vorschubeinrichtung in die Projektionsebene vorgeschoben wird, wird eine vordere Spitze des Lebensmittelstrangs bereits von der Markiereinrichtung erfasst, während die nach dem Stand der Technik bekannten hinteren Detektoren, das heißt die in Vorschubrichtung betrachtet hinter der Markierung angeordneten Detektoren, diese Markierung noch nicht erfassen können. Dies hängt damit zusammen, dass beispielsweise der obere hintere Detektor von einer oberen Kante des Randbereichs des Lebensmittelstrangs, der Teil der beschriebenen Endebene ist, behindert wird und die auf der steilen Endebene befindliche Markierung nicht erfassen kann.

Eine solche Situation liegt folglich zumindest stets dann vor, sobald eine Neigung der Endebene gegen eine senkrechte Ebene steiler ist, als ein Anstellwinkel der hinteren Detektoren gegen eben diese senkrechte Ebene. Sobald dies der Fall ist, können die nach dem Stand der Technik bekannten Detektoren die Markierung im Randbereich des Lebensmittelstrangs nicht erfassen, da sie gewissermaßen hinter der umlaufenden Kante der Endebene des Lebensmittelstrangs "versteckt" ist.

Mittels des erfindungsgemäßen vierten Detektors allerdings, der in Vorschubrichtung betrachtet auf der anderen Seite der Markierung beziehungsweise der Projektionsebene angeordnet ist, kann die Endebene unabhängig von ihrer Neigung stets komplett "von vorne" betrachtet werden. Die Markierung, die mittels der Markiereinrichtung auf den Lebensmittelstrang projiziert wird, ist folglich unabhängig von der Neigung oder der sonstigen Gestaltung insbesondere der Randbereich des Lebensmittelstrangs fortwährend erfassbar.

Dies führt dazu, dass selbst Randbereiche exakt vermessen und entsprechend mittels der Schneideinrichtung mit hoher Maßhaltigkeit geschnitten werden können. Ein Ausschuss an Schnittgut aufgrund unpräziser Erfassung kompliziert geformter Randbereiche entfällt demgemäß, wodurch der Lebensmittelstrang zu einem gegenüber dem Stand der Technik höheren Anteil verwertet und wirtschaftlich genutzt werden kann.

Aus vorrichtungstechnischer Sicht wird die zugrunde liegende Aufgabe entsprechend folglich durch einen vierten Detektor gelöst, mit dem die aktuelle Markierung fortlaufend auch aus einem weiteren Blickwinkel erfassbar ist, wobei der vierte Detektor - in Vorschubrichtung betrachtet - auf der - im Vergleich mit den drei anderen Detektoren - gegenüber liegenden Seite der Markierung angeordnet ist. Der erfindungsgemäße Verfahrensschritt ist mittels einer solchen Vorrichtung besonders einfach durchführbar.

Die Vorrichtung ist dann besonders vorteilhaft, wenn die drei auf einer Seite der Markierung angeordneten Detektoren in einer Ebene angeordnet sind, wobei sämtliche drei Detektoren auf einer Kreisbahn liegen, die um einen Mittelpunkt verläuft, wobei vorzugsweise zwei der drei Detektoren unterhalb des Mittelpunkts angeordnet sind und der dritte Detektor oberhalb des Mittelpunkts angeordnet ist. Diese Anordnung der Detektoren ist besonders vorteilhaft, da eine Betrachtung des Lebensmittelstrangs von einer Unterseite der Vorschubeinrichtung her im Vergleich zu einer Betrachtung des Lebensmittelstrangs von einer Oberseite her aufgrund der durch die Vorschubeinrichtung behinderten Sicht erschwert ist. Um die Markierung auf dem Lebensmittelstrang zuverlässig erfassen zu können, sollten daher zwei der drei auf einer Seite der Markiereinrichtung angeordneten Detektoren unterhalb des Lebensmittelstrangs, also unterhalb des beschriebenen Mittelpunkts liegen. Die Ebene, die die beschriebene Kreisbahn enthält, ist dabei typischerweise senkrecht zur Vorschubrichtung des Lebensmittelstrangs ausgerichtet.

Hinsichtlich der Positionierung der Detektoren auf der Kreisbahn im Raum ist eine solche Anordnung besonders vorteilhaft, bei der ein Winkel zwischen zwei Geraden, die jeweils einen der unteren Detektoren mit dem Mittelpunkt verbinden, zwischen 40° und 120°, vorzugsweise zwischen 60° und 80°, liegt. Das heißt, dass die "unteren" beiden Detektoren vorteilhafterweise vergleichsweise nah beieinander angeordnet sein sollten, um den unteren, durch die Vorschubeinrichtung stark verdeckten Bereich des Lebensmittelstrangs zuverlässig erfassen zu können. Zwar befindet sich in der Ebene, in der die Markierung liegt, ein Spalt zwischen zwei Förderbandteilen der Vorschubeinrichtung, so dass die unteren Detektoren die Randkontur auf der Oberfläche des Lebensmittelstrangs erfassen können, jedoch ist die Sicht im Vergleich zum Blick auf die Oberseite des Lebensmittelstrangs erschwert. Durch die dichte "Abdeckung" der Unterseite mittels der unteren beiden Detektoren kann diese Schwierigkeit allerdings problemlos gelöst werden.

In einer weiteren Ausgestaltung der erfindungsgemäßen Vorrichtung ist vorgesehen, dass ein Winkel zwischen einer den oberhalb des Mittelpunkts angeordneten Detektor mit dem Mittelpunkt der Kreisbahn verbindenden Gerade und einer einen der unterhalb des Mittelpunkts angeordneten Detektoren mit dem Mittepunkt verbindenden Geraden zwischen 120° und 170°, vorzugsweise zwischen 140° und 160°, liegt. Vorteilhafterweise sollte der "obere" der drei auf einer Seite der Markierung angeordneten Detektoren senkrecht oberhalb des Lebensmittelstrangs angeordnet sein, das heißt der obere Detektor sollte in einer vertikalen, die Längsachse des Lebensmittelstrangs enthaltenden Ebene angeordnet sein. Die Betrachtung der Oberfläche des Lebensmittelstrangs direkt "von oben" ist besonders geeignet, um einen oberen Teil der Randkontur mittels eines einzigen Detektors erfassen zu können.

Entsprechend sollte gemäß einer weiterhin vorteilhaften Ausgestaltung der Vorrichtung der vierte Detektor ebenso in einer Ebene angeordnet ist, die vertikal ausgerichtet ist und die Längsachse des Lebensmittelstrangs enthält. Auf diese Weise kann auch der auf der anderen Seite der Markierung liegende Detektor zuverlässig eine Oberseite des Lebensmittelstrangs betrachten, wobei mittels beider vorzugsweise oberhalb des Lebensmittelstrangs angeordneten Detektoren (einer auf der einen, einer auf der anderen Seite der Markierung), die Randbereiche des Lebensmittelstrangs gemäß obiger Erläuterung zuverlässig erfasst werden können.

Vorzugsweise sollte außerdem eine optische Achse mindestens eines oberhalb des Lebensmittelstrangs angeordneten Detektors, insbesondere die optische Achse des vierten Detektors, mit einer die Markierung enthaltenen, zu der Vorschubrichtung des Lebensmittelstrangs senkrechten Ebene einen Winkel zwischen 20° und 60°, vorzugsweise zwischen 40° und 50°, einschließen. Ein durch diese Winkel beschriebener "schräger Blick" der Detektoren auf den Lebensmittelstrang ist besonders gut geeignet, um die Markierung auf der Oberfläche des Lebensmittelstrangs zuverlässig zu erfassen.

Insbesondere wenn die optischen Achsen aller Detektoren gegen eine senkrecht zu der Vorschubrichtung des Lebensmittelstrangs orientierten Ebene unter einem Winkel zwischen 20° und 60° geneigt sind, lassen sich besonders zuverlässige Ergebnisse erzielen. Eine derartige Schrägstellung der Detektoren erhöht zwar den Aufwand bei der Erfassung der markierten Oberflächenkontur stark wie die - insbesondere die drei Detektoren auf einer Seite der Projektionsebene betrachtet - nur recht schwer miteinander in Einklang zu bringen sind. Trotz dieser vergrößerten Ansprüche an die Rechenleistung bei der Auswertung der von schräg stehenden Detektoren erzeugten Kamerabilder ergibt sich eine besonders große Genauigkeit der Volumen- bzw. Massenberechnung, da mit Hilfe der Schrägstellung auch unregelmäßig geformte Oberflächenkonturen, insbesondere auch solche im Bereich der Endstücke des Lebensmittelstrangs, zuverlässig detektiert werden können.

Ferner ist es von Vorteil, wenn eine optische Achse mindestens eines, vorzugsweise zweier unterhalb des Lebensmittelstrangs angeordneten Detektors/angeordneter Detektoren mit einer die Markierung enthaltenden, zu der Vorschubrichtung des Lebensmittelstrangs senkrechten Ebene einen Winkel zwischen 5° und 50°, vorzugsweise zwischen 10° und 30°, einschließen.

### Ausführungsbeispiele

Das erfindungsgemäße Verfahren sowie die erfindungsgemäße Vorrichtung werden nachstehend anhand eines Ausführungsbeispiels, das in den Figuren dargestellt ist, näher erläutert.

Es zeigt:
- Fig. 1:: Eine erfindungsgemäße Vorrichtung mit einem zu zerteilenden Lebensmittelstrang,
- Fig. 2:: wie Figur 1, jedoch im Detail, wobei der Lebensmittelstrang in einer Anfangsposition ist,
- Fig. 3:: wie Figur 2, jedoch befindet sich der Lebensmittelstrang in einer Mittelposition,
- Fig. 4:: wie Figur 2, jedoch befindet sich der Lebensmittelstrang in einer Endposition,
- Fig. 5:: einen senkrecht zu einer Vorschubrichtung des Lebensmittelstrangs gelegten Schnitt durch die erfindungsgemäße Vorrichtung und
- Fig. 6:: einen parallel zu der Vorschubrichtung des Lebensmittelstrangs gelegten Schnitt durch die erfindungsgemäße Vorrichtung.

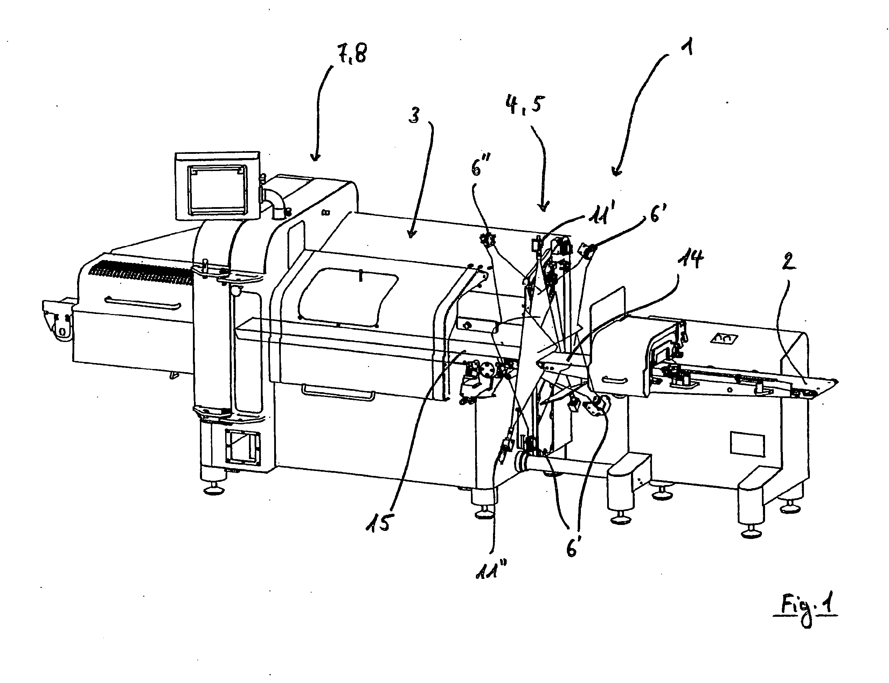

Das Ausführungsbeispiel, dass in den Figuren 1 bis 6 dargestellt ist, zeigt eine erfindungsgemäße Vorrichtung 1 zum gewichtsgenauen Schneiden, die eine Vorschubeinrichtung 2, eine Schneideinrichtung 3 und eine Messeinrichtung 4 aufweist, wobei die Messeinrichtung 4 eine Markiereinrichtung 5, vier Detektoren 6 sowie eine Auswerteeinrichtung 7 umfasst. Ferner weist die Vorrichtung 1 eine Steuereinrichtung 8 auf, mittels derer die Vorschubeinrichtung 2 in Abhängigkeit von der Beschaffenheit eines Lebensmittelstrangs 9 gesteuert wird.

Die Vorschubeinrichtung 2 ist dazu geeignet, den Lebensmittelstrang 9 auf die Schneideinrichtung 3 zu zu befördern, wobei eine Längsachse 10 des Lebensmittelstrangs 9 parallel zur Vorschubrichtung der Vorschubeinrichtung 2 ausgerichtet ist. Die Vorschubeinrichtung 2 ist dabei typischerweise als Förderband ausgebildet, wobei dieses Förderband aus einer Mehrzahl hintereinander geschalteter Förderbänderteile bestehen kann, die an Übergangsfugen aneinander grenzen oder zumindest nahe kommen.

Bevor der Lebensmittelstrang 9 die Schneideinrichtung 3 erreicht, wird er mittels der Messeinrichtung 4 vermessen. Eine solche während der Vorschubbewegung stattfindende Vermessung des Lebensmittelstrangs 9 wird nachfolgend erläutert:

Die Markiereinrichtung 5 der Messeinrichtung 4 verfügt im gezeigten Beispiel über drei Emitterelemente 11, die hier aus Lasermodulen gebildet sind. Die Emitterelemente 11 sind derart zu der Vorschubeinrichtung 2 angeordnet, dass der mittels der Vorschubeinrichtung 2 transportierte Lebensmittelstrang 9 in einem Mittenbereich einer von den Emitterelementen 11 gebildeten Projektionsebene 12 durch selbige geführt wird. Von den Emitterelementen 11 ausgehendes Laserlicht trifft im Zuge dieser Hindurchführung des Lebensmittelstrangs 9 innerhalb der Projektionsebene 12 auf den Lebensmittelstrang 9 und wird von einer Oberfläche 13 desselben reflektiert. Während der Lebensmittelstrang 9 die Projektionsebene 12 passiert, bewegt sich eine mittels des Laserlichts erzeugte Markierung auf der Oberfläche 13 des Lebensmittelstrangs 9 relativ zu demselben, wobei die Markiereinrichtung 5 selbst relativ zur Vorrichtung 1 fest steht und die Projektionsebene nicht bewegt wird. Die Markierung "bewegt" sich mithin lediglich scheinbar. Die Projektionsebene 12 ist senkrecht zu der Vorschubrichtung orientiert.

Um die Oberfläche 13 des Lebensmittelstrangs 9 von "allen Seiten", das heißt über einen gesamten Umfang eines Querschnitts des Lebensmittelstrangs 9, mit dem Laserlicht der Emitterelemente 11 lückenlos zu erfassen, sind die hier verwendeten drei Emitterelemente 11 in einer senkrecht zu der Vorschubrichtung des Lebensmittelstrangs 9 betrachteten Ebene um den Lebensmittelstrang 9 herum angeordnet. Im gezeigten Beispiel ist ein oberes Emitterelement 11' senkrecht oberhalb des Lebensmittelstrangs 9 angeordnet, während zwei untere Emitterelemente 11" schräg unterhalb des Lebensmittelstrangs 9 angeordnet sind. Eine optimale Position der Emitterelemente 11 kann dabei je nach individueller Vorrichtung unterschiedlich sein. Im vorliegenden Beispiel sind die beiden unteren Emitterelemente 11" in der Projektionsebene unter einem Winkel α von ca. 40° gegen eine Senkrechte angeordnet.

Damit ein Querschnitt des Lebensmittelstrangs 9 auch von unten beobachtet werden kann, ist die Vorschubeinrichtung 2 der Vorrichtung 1 in der Projektionsebene 12 geteilt, das heißt dass ein vorderes Förderbandteil 14 der Vorschubeinrichtung 2 "vor" der Projektionsebene 12 endet und ein hinteres Förderbandteil 15 erst "nach" der Projektionsebene 12 den Lebensmittelstrang 9 wieder aufnimmt. Zwischen diesen beiden Förderbandteilen 14, 15 der Vorscheinrichtung 12 ist der Lebensmittelstrang 9 demzufolge über einem Spalt frei schwebend. Insbesondere wird durch diese Teilung der Vorschubeinrichtung 2 ermöglicht, dass das von den unteren Emitterelementen 11" auf die Oberfläche 13 des Lebensmittelstrangs 9 geworfene Laserlicht nicht von der Vorschubeinrichtung 2 blockiert wird und ebenso ein Blick auf eine mittels der Emitterelemente 11 erzeugte Randkontur auf dem Lebensmittelstrang 9 durch die Detektoren 6 frei bleibt, so dass diese die Randkontur erfassen können. Eine die Randkontur beziehungsweise die Markierung enthaltende Ebene, die mit der Projektionsebene 12 zusammenfällt, ist dabei senkrecht zur Vorschubrichtung des Lebensmittelstrangs 9 orientiert.

Das Laserlicht der Emitterelemente 11 der Markiereinrichtung 5 wird von der Oberfläche 13 des Lebensmittelstrangs 9 reflektiert und kann anschließend von den vier Detektoren 6 der Messeinrichtung 4, die hier aus Kameras gebildet sind, erfasst werden. Drei dieser vier Detektoren 6 sind auf derselben Seite der mittels der Markiereinrichtung 5 erzeugten Projektionsebene 12 angeordnet, wobei im gezeigten Beispiel diese drei Detektoren 6' auf einer hinteren, der Schneideinrichtung 3 abgewandten Seite der Projektionsebene 3 angeordnet sind. Der vierte Detektor 6" hingegen ist auf einer vorderen, der Schneideinrichtung 3 zugewandten Seite der Projektionsebene 12 angeordnet. Die drei hinteren Detektoren 6' sind ähnlich zu den drei Emitterelementen 11 um den Lebensmittelstrang 9 herum verteilt, so dass sie die von der Oberfläche 13 des Lebensmittelstrangs 9 reflektierte Randkontur möglichst lückenlos erfassen können. Eine "Blickrichtung" der hinteren Detektoren 6' weist jeweils in Richtung auf den Lebensmittelstrang 9, wobei eine zur Längsachse 10 des Lebensmittelstrangs 9 parallele Richtungskomponente der Blickrichtung in Vorschubrichtung des Lebensmittelstrangs 9 gerichtet ist. Da die drei hinteren Detektoren 6' hinter der Projektionsebene 12 angeordnet sind, ist diese Ausrichtung der Blickrichtung notwendig, damit die Detektoren 6' die Randkontur erfassen können.

Der erfindungsgemäße vordere Detektor 6" ist ähnlich zu dem oberen Detektor 6' oberhalb des Lebensmittelstrangs 9 angeordnet, wobei der vordere Detektor 6" allerdings entgegen der Vorschubrichtung des Lebensmittelstrangs 9 blickt. Das heißt, dass die zur Längsachse 10 des Lebensmittelstrangs 9 parallele Richtungskomponente der Blickrichtung des Detektors 6" entgegen der Vorschubrichtung ausgerichtet ist. Der vierte Detektor 6" ist somit in der Lage, auch solche Ausschnitte der auf die Oberfläche 13 des Lebensmittelstrangs 9 projizierten Randkontur zu erfassen, die für die hinter der Projektionsebene 12 angeordneten Detektoren 6' nicht erfassbar sind. Dieser Fall tritt insbesondere bei solchen Lebensmittelsträngen auf, deren Endabschnitte beziehungsweise vordere und hintere Randbereiche unter einem steilen Winkel zulaufen, so dass der obere hintere Detektor 6' die Randkontur nicht erfassen kann, da diese von dem Lebensmittelstrang 9 selbst verdeckt ist. Der vierte Detektor 6" ermöglicht also eine vollständigere Erfassung der mittels der Emitterelemente 11 erzeugten Randkontur und erfüllt damit die gestellte Aufgabe.

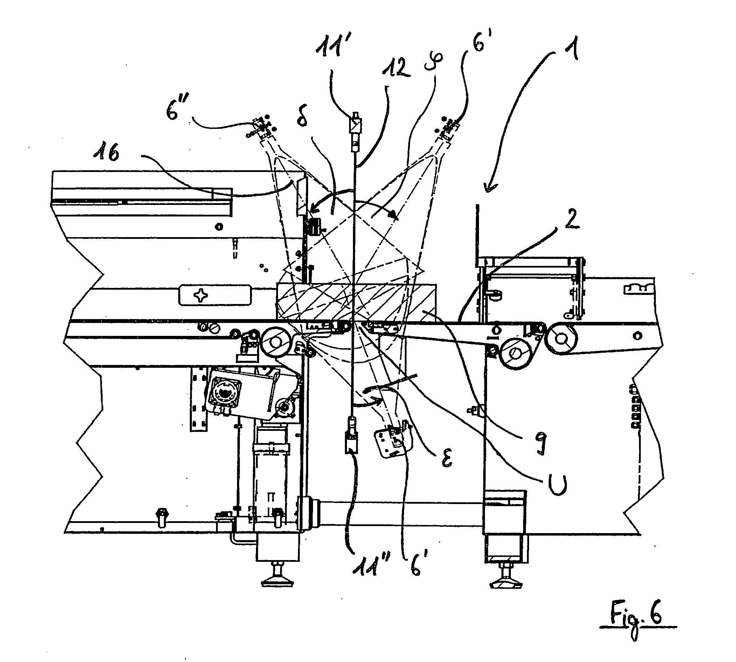

Wie insbesondere aus Figur 6 der vorliegenden Anmeldung hervorgeht, sollten Neigungen optischer Achsen 16 der Detektoren 6 (vorzugsweise aller Detektoren 6) gegen eine vertikale, senkrecht auf der Vorschubrichtung des Lebensmittelstrangs 9 stehende Ebene typischerweise in einem Bereich von 20° bis 50° liegen. Im gezeigten Beispiel sind die oberen Detektoren 6', 6" um einen Winkel δ von 30° und ϕ ebenfalls von 30° und die unteren Detektoren 6' um einen Winkel ε von 20° gegen diese Ebene geneigt. In Figur 6 ist auch die Übergangsfuge U zwischen den Förderbandteilen 14, 15 gut zu erkennen.

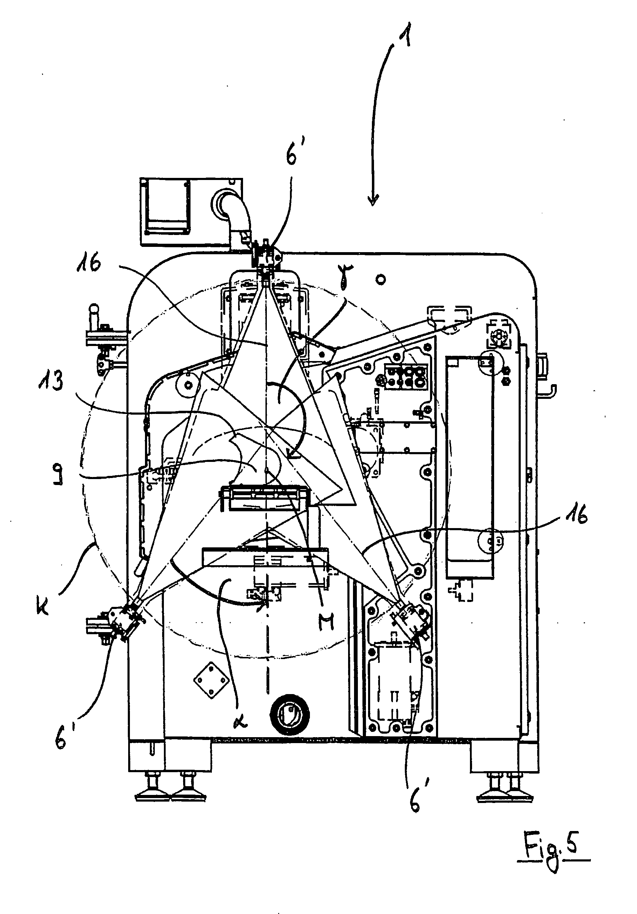

Hinsichtlich der Anordnung der drei Detektoren 6', die auf einer Seite der Projektionsebene 12 angeordnet sind, geht aus Figur 5 ferner hervor, dass diese drei Detektoren auf einer gemeinsamen Kreisbahn K mit einem Mittelpunkt M in einer Ebene liegen. Im vorliegenden Beispiel ist diese Ebene senkrecht zur Vorschubrichtung des Lebensmittelstrangs 9 ausgerichtet. Ebenso wie die Emitterelemente 11" schließen die unteren Detektoren 6' mit einer senkrechten, durch die Längsachse 10 des Lebensmittelstrangs 9 verlaufenden Ebene einen Winkel α von ca. 40° ein. Der obere Detektor 6' ist hingegen in besagter Ebene angeordnet und schließt jeweils mit den optischen Achsen 16 der unteren Detektoren 6' einen Winkel γ von ca. 130° ein.

Die mittels der Detektoren 6 erfasste Randkontur wird schließlich mittels der Auswerteeinrichtung 7 dahingehend ausgewertet, dass eine Querschnittsfläche des Lebensmittelstrangs 9 fortlaufend bestimmt wird, das heißt eine Information über die Größe der Querschnittsfläche des Lebensmittelstrangs 9 vorliegt, der sich gerade in der Projektionsebene 12 befindet. Bei Kenntnis einer Dichte des Materials, aus dem der Lebensmittelstrangs 9 gebildet ist, kann anschließend über die Steuereinheit 8 die Vorschubeinrichtung 2 und/oder die Schneideinrichtung 3 fortlaufend so eingestellt werden, dass eine Dicke einer aktuell von dem Lebensmittelstrang 9 abzutrennenden Scheibe derart ausfällt, dass das Produkt aus Querschnittsfläche, Dicke und Dichte des Lebensmittelstrangs 9 jeweils einen zuvor definierten Massenwert, beispielsweise 150 g, ergibt. Dabei ist die Dichte zuvor mittels einer gesonderten Vorwaage und einer Volumenmessung des gesamten Lebensmittelstrangs 9 bestimmt worden. Aufgrund der quasi lückenlosen Erfassung der Randkontur des Lebensmittelstrangs 9 selbst in stark unregelmäßig geformten Randbereichen des Lebensmittelstrangs 9, ist die Querschnittsfläche mittels der erfindungsgemäßen Vorrichtung 1 besonders präzise bestimmbar. Die Genauigkeit hinsichtlich der Masse der einzelnen abzutrennenden Scheiben des Lebensmittelstrangs 9 erfüllt folglich selbst in den zuvor kritischen Randbereichen des Lebensmittelstrangs 9 höchste Anforderungen. Hierdurch kann die Ausbeute gewichtsgenaue geschnittener Scheiben gesteigert werden, beispielsweise von durchschnittlich 33 Stücken bei einem Kotelettstrang auf durchschnittlich 34 Stücke, was einer Steigerung von rund 3 % entspricht. Nacharbeit, die bei bekannten Verfahren für das manuelle Ablösen des Fleischs von dem Knochen bei nicht gewichtsgenauen Scheiben nötig war, entfällt bei der Erfindung weitestgehend.

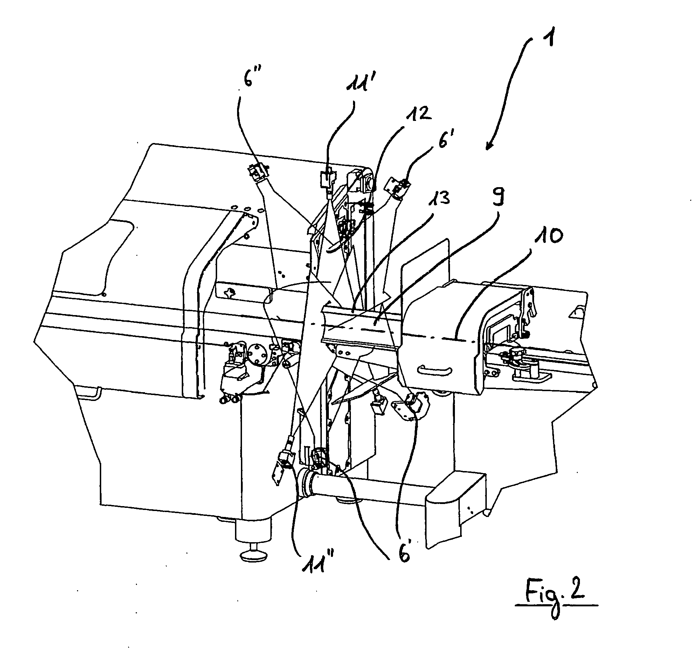

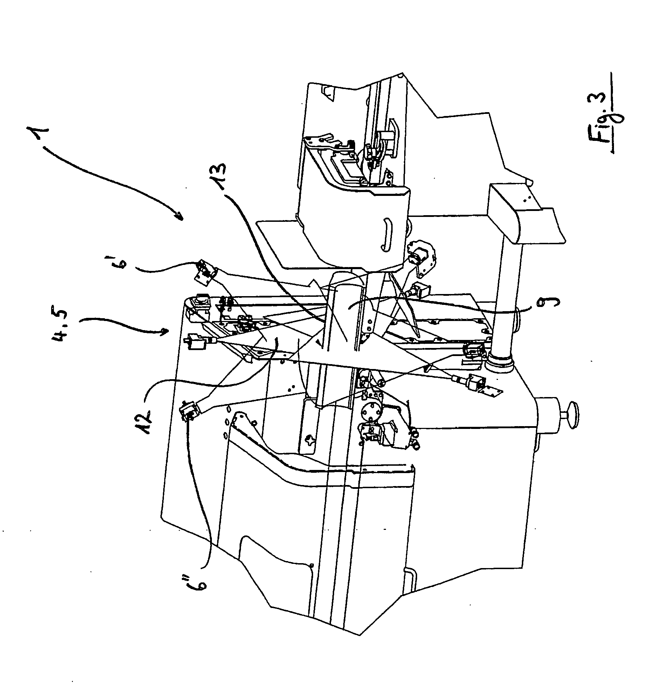

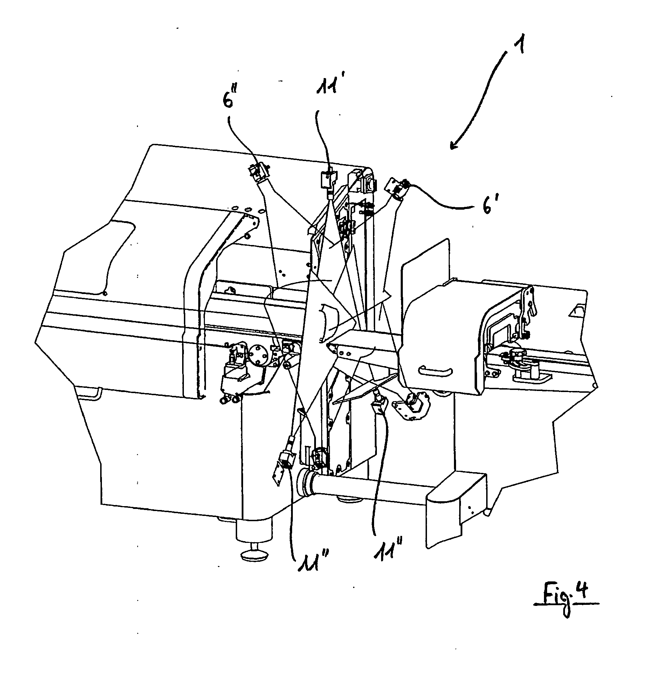

Die Figuren 2 bis 4 zeigen beispielhaft einen Lebensmittelstrang 9, der durch die Projektionsebene 12 der Markiereinrichtung 5 hindurch geführt wird, wobei Figur 4 den Lebensmittelstrang 9 in einer Anfangsposition zeigt, in der die Messung mittels der Emitterelemente 11 und der Detektoren 6 gerade für den Lebensmittelstrang 9 beginnt, Figur 3 eine Mittelposition des Lebensmittelstrangs 9 zeigt und schließlich Figur 4 eine Endposition zeigt, in der ein letzter Querschnitt des Lebensmittelstrangs 9 mittels der Messeinrichtung 4 erfasst wird. Von den Emitterelementen 11 ausgesandtes Laserlicht sowie Betrachtungsbereiche der Detektoren 6 sind in den Figuren graphisch hervorgehoben und verdeutlichen das Funktionsprinzip. Wesentlich ist, dass die erfindungsgemäße Querschnittsvermessung und Volumenberechnung fortlaufend während der Vorschubbewegung, das heißt der Passage der Projektionsebene 12, erfolgt und der Lebensmittelstrang 9 zu keiner Zeit verlangsamt oder gar gestoppt werden muss.

### Bezugszeichenliste

- 1: Vorrichtung
- 2: Vorschubeinrichtung
- 3: Schneideinrichtung
- 4: Messeinrichtung
- 5: Markiereinrichtung
- 6, 6', 6": Detektor
- 7: Auswerteeinrichtung
- 8: Steuereinrichtung
- 9: Lebensmittelstrang
- 10: Längsachse
- 11, 11', 11": Emitterelement
- 12: Projektionsebene
- 13: Oberfläche
- 14: hinteres Förderbandteil
- 15: vorderes Förderbandteil
- 16: optische Achse
- α: Winkel
- δ: Winkel
- γ: Winkel
- ε: Winkel
- ϕ: Winkel
- M: Mittelpunkt
- K: Kreisbahn
- U: Übergangsfuge

## Patentansprüche

1. Verfahren zum gewichtsgenauen Schneiden eines Lebensmittelstrangs (9) in Portionen mit den folgenden Verfahrensschritten:
a) Der Lebensmittelstrang (9) wird mittels einer Vorschubeinrichtung (2) in Vorschubrichtung relativ zu einem Maschinengestell auf eine Schneideinrichtung (3) zu vorgeschoben, wobei eine Längsachse (10) des Lebensmittelstrangs (9) parallel zu der Vorschubrichtung verläuft.
b) Fortlaufend während des Vorschiebens wird mittels einer Messeinrichtung (4) an - in Richtung der Längsachse (10) des Lebensmittelstrangs (9) betrachtet - verschiedenen Stellen des die Messeinrichtung (4) passierenden Lebensmittelstrangs (9) dessen jeweilige Querschnittsfläche bestimmt, wobei
c) mittels einer relativ zu dem Maschinengestell feststehenden Markiereinrichtung (5) der Messeinrichtung (4) teilweise durch eine Übergangsfuge (U) zwischen zwei aufeinander folgenden Förderbandteilen (14, 15) hindurch auf einer Oberfläche des Lebensmittelstrangs (9) fortlaufend eine Markierung erzeugt wird, die sich infolge einer Vorschubbewegung des Lebensmittelstrangs (9) in Richtung von dessen Längsachse (10) relativ zu dem Lebensmittelstrang (9) bewegt.
d) Mittels dreier, jeweils zu dem Maschinengestell feststehender Detektoren (6') wird die aktuelle Markierung wiederum teilweise durch die Übergangsfuge (U) zwischen zwei aufeinander folgenden Förderbandteilen (14, 15) hindurch aus unterschiedlichen Blickwinkeln fortlaufend erfasst, wobei die Detektoren (6') - in Vorschubrichtung betrachtet - auf derselben Seite der Markierung angeordnet sind.
e) Mittels einer Auswerteeinrichtung (7) der Messeinrichtung (4) wird aus von den Detektoren (6, 6', 6") erzeugten Bilddaten fortlaufend die jeweils aktuelle Größe der Querschnittsfläche ermittelt.
f) Unter Verwendung der Daten bezüglich der aktuellen Größe der Querschnittsfläche werden von einer Steuereinrichtung (8) die Schneideinrichtung (3) und/oder die Vorschubeinrichtung (2) so angesteuert, dass sukzessive gewichtsgenaue Portionen von einem vorderen Ende des Lebensmittelstrangs (9) abgeschnitten werden,
**gekennzeichnet durch** den folgenden Verfahrensschritt:
g) die aktuelle Markierung wird fortlaufend auch aus einem weiteren Blickwinkel von einem vierten Detektor (6") erfasst, der - in Vorschubrichtung betrachtet - auf der - im Vergleich mit den drei anderen Detektoren (6') - gegenüberliegenden Seite der Markierung angeordnet ist.

2. Vorrichtung (1) zum gewichtsgenauen Schneiden eines Lebensmittelstrangs (9) in Portionen mit
- einer Vorschubeinrichtung (2), mit der der Lebensmittelstrang (9) in Vorschubrichtung vorschiebbar ist, wobei eine Längsachse (10) des Lebensmittelstrangs (9) während der Vorschubbewegung parallel zu der Vorschubrichtung ausgerichtet ist,
- eine Schneideinrichtung (3), auf die der Lebensmittelstrang (9) mittels der Vorschubeinrichtung (2) vorschiebbar ist,
- einer Messeinrichtung (4), mit der fortlaufend während es Vorschiebens an - in Richtung der Längsachse (10) des Lebensmittelstrangs (9) betrachtet - verschiedenen Stellen des die Messeinrichtung (4) passierenden Lebensmittelstrangs (9), dessen Querschnittsfläche bestimmbar ist,
- einer Markiereinrichtung (5) der Messeinrichtung (4), wobei mittels der Markiereinrichtung (5) teilweise durch eine Übergangsfuge (U) zwischen zwei aufeinander folgenden Förderbandteilen (14, 15) hindurch auf einer Oberfläche (13) des Lebensmittelstrangs (9) fortlaufend eine Markierung erzeugbar ist, die sich infolge einer Vorschubbewegung in Richtung der Längsachse (10) des Lebensmittelstrangs (9) relativ zu dem Lebensmittelstrang (9) bewegt,
- drei Detektoren (6') der Messeinrichtung (4), wobei mittels der Detektoren (6') jeweils die aktuelle Markierung aus unterschiedlichen Blickwinkeln wiederum teilweise durch die Übergangsfuge (U) zwischen zwei aufeinander folgenden Förderbandteilen (14, 15) hindurch fortlaufend erfassbar ist, wobei die Detektoren (6') - in Vorschubrichtung betrachtet - auf derselben Seite der Markierung angeordnet sind,
- eine Auswerteeinrichtung (7) der Messeinrichtung (4), wobei mittels der Auswerteeinrichtung (7) aus von den Detektoren (6, 6', 6") erzeugte Bilddaten fortlaufend die jeweils aktuelle Größe der Querschnittsfläche ermittelbar ist,
- einer Steuereinrichtung (8), mit der unter Verwendung der Daten bezüglich der aktuellen Querschnittsfläche die Schneideinrichtung (3) und/oder die Vorschubeinrichtung (2) so ansteuerbar sind, dass sukzessive gewichtsgenaue Portionen von einem vorderen Ende eines Lebensmittelstrangs (9) abschneidbar sind,
**gekennzeichnet durch**
- einen vierten Detektor (6"), mit dem die aktuelle Markierung fortlaufend auch aus einem weiteren Blickwinkel erfassbar ist, wobei der vierte Detektor (6") - in Vorschubrichtung betrachtet - auf der - im Vergleich mit den drei anderen Detektoren (6') - gegenüber liegenden Seite der Markierung angeordnet ist.

3. Vorrichtung (1) nach Anspruch 2, **dadurch gekennzeichnet, dass** die drei auf einer Seite der Markierung angeordneten Detektoren (6') in einer Ebene angeordnet sind, wobei vorzugsweise sämtliche drei Detektoren (6') auf einer Kreisbahn (K) liegen, die um einen Mittelpunkt (M) verläuft, wobei weiter vorzugsweise zwei der drei Detektoren (6') unterhalb des Mittelpunkts (M) angeordnet sind und der dritte Detektor (6') oberhalb des Mittelpunkts (M) angeordnet ist.

4. Vorrichtung (1) nach Anspruch 3, **dadurch gekennzeichnet, dass** ein Winkel (α) zwischen einer Geraden, die jeweils einen der unteren Detektoren (6') mit dem Mittelpunkt (M) verbindet, und einer senkrechten, die Längsachse (10) des Lebensmittelstrangs (9) enthaltenden Ebene zwischen 20° und 60°, vorzugsweise zwischen 30° und 50°, liegt.

5. Vorrichtung (1) nach Anspruch 3 oder 4, **dadurch gekennzeichnet, dass** ein Winkel (γ) zwischen einer Geraden, die den oberhalb des Mittelpunkts (M) angeordneten Detektor (6') mit dem Mittelpunkt (M) der Kreisbahn (K) verbindet, und einer weiteren Geraden, die einen der unterhalb des Mittelpunkts (M) angeordneten Detektoren (6') mit dem Mittepunkt (M) verbindet, zwischen 120° und 170°, vorzugsweise zwischen 140° und 160°, liegt.

6. Vorrichtung (1) nach einem der Ansprüche 2 bis 5, **dadurch gekennzeichnet, dass** eine optische Achse (16) mindestens eines oberhalb des Lebensmittelstrangs (9) angeordneten Detektors (6, 6', 6"), insbesondere die optische Achse (16) des vierten Detektors (6"), mit einer die Markierung enthaltenen, zu der Vorschubrichtung des Lebensmittelstrangs (9) senkrechten Ebene einen Winkel (δ) zwischen 20° und 60°, vorzugsweise zwischen 40° und 50°, einschließet.

7. Vorrichtung (1) nach einem der Ansprüche 2 bis 6, **dadurch gekennzeichnet, dass** eine optische Achse (16) mindestens eines unterhalb des Lebensmittelstrangs (9) angeordneten Detektors (6, 6') mit einer die Markierung enthaltenen, zu der Vorschubrichtung des Lebensmittelstrangs (9) senkrechten Ebene einen Winkel (ε) zwischen 5° und 50°, vorzugsweise zwischen 10° und 30°, einschließen.

8. Vorrichtung (1) nach einem der Ansprüche 2 bis 7, **dadurch gekennzeichnet, dass** der vierte Detektor (6") in einer Ebene angeordnet ist, die vertikal ausgerichtet ist und die Längsachse (10) des Lebensmittelstrangs (9) enthält.

9. Vorrichtung (1) nach einem der Ansprüche 2 bis 8, **dadurch gekennzeichnet, dass** die von der Markiereinrichtung (5) erzeugte Markierung eine in sich geschlossene, auf der Oberfläche des Lebensmittelstrangs (9) umlaufende Linie ist, wobei vorzugsweise die Linie vollständig innerhalb einer Projektionsebene verläuft, die weiter vorzugsweise senkrecht zu der Vorschubrichtung ausgerichtet ist.

## Claims

1. A method for cutting a length of food (9) into portions having a precise weight, comprising the following process steps:
a) the length of food (9) is advanced toward a cutting apparatus (3) in a feeding direction relative to a machine stand by a feed device (2), wherein a lengthwise axis (10) of the length of food (9) extends parallel to the feeding direction,
b) the cross-sectional area of the length of food (9) is determined successively - viewed in the direction of the lengthwise axis (10) of the length of food (9) - at various points by means of a measuring device (4) during feeding as the respective points pass in front of the measuring device (4), wherein
c) a mark is created successively on a surface of the length of food (9) in part through a transition joint (U) between two consecutive conveyor belt sections (14, 15) by means of a marking apparatus (5) of the measuring device (4) that is fixed relative to the machine stand, which mark shifts relative to the length of food (9) due to the feeding movement of the length of food (9) in the direction of the lengthwise axis (10) thereof,
d) the current mark is captured successively from different viewing angles by means of three detectors (6'), each of which is fixed with respect to the machine stand, again in part through a transition joint (U) between two consecutive conveyor belt sections (14, 15), wherein the detectors (6') - viewed in the direction of advance - are arranged on the same side of the mark,
e) the respective current size of the cross-sectional area is calculated successively by means of an evaluation unit (7) of the measuring device (4) from the image data generated by the detectors (6, 6', 6"),
f) the cutting apparatus (3) and/or the feed device (2) is/are actuated by a controller (8) using the data regarding the current size of the cross sectional area in such manner that successive portions having a precise weight are cut off from a leading end of the length of food (9), **characterized by** the following process step:
g) the current mark is captured from a further viewing angle by a fourth detector (6") which - viewed in the direction of advance - is arranged on the opposite side of the mark to the other three detectors (6').

2. A device (1) for cutting a length of food (9) into portions having a precise weight, comprising
- a feed device (2), with which the length of food (9) can be advanced in a feeding direction, wherein a lengthwise axis (10) of the length of food (9) is aligned parallel to the feeding direction during the feeding movement,
- a cutting apparatus (3), toward which the length of food (9) can be advanced by means of the feed device (2),
- a measuring device (4), with which the cross-sectional area of the length of food (9) - viewed in the direction of the lengthwise axis (10) of the length of food (9) - can be determined at various points successively during feeding as the points pass in front of the measuring device (4),
- a marking apparatus (5) of the measuring device (4), wherein a mark can be created successively on a surface (13) of the length of food (9) in part through a transition joint (U) between two consecutive conveyor belt sections (14, 15) by means of the marking apparatus (5), which mark shifts relative to the length of food (9) as a consequence of a feeding movement of the length of food (9) in the direction of the lengthwise axis (10) thereof,
- three detectors (6') of the measuring device (4), wherein the respective current mark can be captured successively by the detectors (6') from different viewing angles, again in part through the transition joint (U) between two consecutive conveyor belt sections (14, 15), wherein the detectors (6') - viewed in the direction of advance - are arranged on the same side of the mark,
- an evaluation unit (7) of the measuring device (4), wherein the respective current size of the cross-sectional area can be calculated by the evaluation unit (7) successively from the image data generated by the detectors (6, 6', 6"),
- a controller (8) with which the cutting apparatus (3) and/or the feed device (2) can be actuated using the data regarding the current size of the cross sectional area in such manner that successive portions having a precise weight can be cut off from a leading end of the length of food (9),
**characterized by**
- a fourth detector (6"), with which the current mark can also be captured successively from a further viewing angle, wherein the fourth detector (6") - viewed in the direction of advance - is arranged on the opposite side of the mark to the other three detectors (6').

3. The device (1) according to claim 2, **characterized in that** the three detectors (6') arranged on one side of the mark are arranged in one plane, wherein all three detectors (6') are preferably situated in one circular path (K) extending about a central point (M), wherein more preferably two of the three detectors (6') are arranged below the central point (M) and the third detector (6') is arranged above the central point (M).

4. The device (1) according to claim 3, **characterized in that** an angle (α) between straight lines from each of the lower detectors (6') to the central point (M) and a vertical plane comprising the lengthwise axis (10) of the length of food (9) has a value between 20° and 60°, preferably between 30° and 50°.

5. The device (1) according to claim 3 or 4, **characterized in that** an angle (γ) between a straight line from the detector (6') arranged above the central point (M) to the central point (M) of the circular path (K) and another straight line from one of the detectors (6') arranged below the central point (M) to the central point (M) has a value between 120° and 170°, preferably between 140° and 160°.

6. The device (1) according to any of claims 2 to 5, **characterized in that** an optical axis (16) of at least one detector (6, 6', 6") arranged above the length of food (9), particularly the optical axis (16) of the fourth detector (6"), is at an angle (δ) having a value between 20° and 60°, preferably between 40° and 50° with a plane perpendicular to the feed direction of the length of food (9) and containing the mark.

7. The device (1) according to any of claims 2 to 6, **characterized in that** an optical axis (16) of at least one detector (6, 6') arranged below the length of food (9) is at an angle (ε) having a value between 5° and 50°, preferably between 10° and 30°, with a plane perpendicular to the feed direction of the length of food (9) and containing the mark.

8. The device (1) according to any of claims 2 to 7, **characterized in that** the fourth detector (6") is arranged in a plane that is aligned vertically and contains the lengthwise axis (10) feed direction of the length of food (9).

9. The device (1) according to any of claims 2 to 8, **characterized in that** the mark created by the marking apparatus (5) is a line forming a closed loop about the circumference of the surface of the length of food (9), wherein the line preferably extends completely within a plane of projection, which is more preferably aligned perpendicularly to the feed direction.

## Revendications

1. Procédé pour le découpage selon un poids précis d'un boudin de produit alimentaire (9) en portions, avec les étapes de procédé suivantes :
a) le boudin de produit alimentaire (9) est poussé vers l'avant dans la direction de poussée, par rapport à un châssis de machine, vers un dispositif de coupe (3), au moyen d'un dispositif de poussée (2), l'axe longitudinal (10) du boudin de produit alimentaire (9) s'étendant parallèlement à la direction de poussée,
b) pendant la poussée vers l'avant, à différents endroits du boudin de produit alimentaire (9) passant devant un dispositif de mesure (4) - vu dans la direction de l'axe longitudinal (10) du boudin de produit alimentaire (9), la surface de section transversale respective de celui-ci est déterminée en continu, au moyen du dispositif de mesure (4), dans lequel
c) un marquage est réalisé en continu sur une surface du boudin de produit alimentaire (9), au moyen d'un dispositif de marquage (5) du dispositif de mesure (4) fixe par rapport au châssis de machine, partiellement à travers un joint de transition (U) entre deux parties de bande transporteuse consécutives (14, 15), ledit marquage se déplaçant par rapport au boudin de produit alimentaire (9), suite à un mouvement de poussée vers l'avant du boudin de produit alimentaire (9) dans la direction de l'axe longitudinal (10) de celui-ci,
d) le marquage actuel est déterminé en continu sous différents angles, au moyen de trois détecteurs (6') respectivement immobiles par rapport au châssis de machine, de nouveau partiellement à travers le joint de transition (U) entre deux parties de bande de transport (14, 15) consécutives, les détecteurs (6') - vus dans la direction de poussée - étant agencés du même côté du marquage.
e) la taille actuelle respective de la surface de section transversale est déterminée au moyen d'un dispositif d'évaluation (7) du dispositif de mesure (4), à partir de données d'image produites par les détecteurs (6, 6', 6").
f) à l'aide des données concernant la taille actuelle de la surface de section transversale, le dispositif de coupe (3) et/ou le dispositif de poussée (2) sont commandés par un dispositif de commande (8) de manière à ce que des portions successives au poids précis soient coupées à partir d'une extrémité avant du boudin de produit alimentaire (9),
**caractérisé en ce que**
g) le marquage actuel est également déterminé en continu sous un angle supplémentaire par un quatrième détecteur (6") agencé - vu dans la direction de poussée - du côté opposé du marquage - en comparaison avec les trois autres détecteurs (6').

2. Dispositif (1) pour lé découpage selon un poids précis d'un boudin de produit alimentaire (9) en portions, avec
- un dispositif de poussée (2) permettant de pousser le boudin de produit alimentaire (9) vers l'avant dans la direction de poussée, l'axe longitudinal (10) du boudin de produit alimentaire (9) s'étendant parallèlement à la direction de poussée pendant le mouvement de poussée vers l'avant,
- un dispositif de coupe (3) vers lequel le boudin de produit alimentaire (9) peut être poussé au moyen du dispositif de poussée (2),
- un dispositif de mesure (4) permettant, pendant la poussée vers l'avant, de déterminer en continu la surface de section transversale respective du boudin de produit alimentaire (9) passant devant le dispositif de mesure (4), à différents endroits de celui-ci - vu dans la direction de l'axe longitudinal (10) du boudin de produit alimentaire (9),
- un dispositif de marquage (5) du dispositif de masure (4), un marquage étant réalisé en continu sur une surface (13) du boudin de produit alimentaire (9), au moyen du dispositif de marquage (5), partiellement à travers un joint de transition (U) entre deux parties de bande transporteuse consécutives (14, 15), ledit marquage se déplaçant par rapport au boudin de produit alimentaire (9), suite à un mouvement de poussée vers l'avant dans la direction de l'axe longitudinal (10) du boudin de produit alimentaire (9),
- trois détecteurs (6') du dispositif de mesure (4), les trois détecteurs (6') permettant de déterminer en continu le marquage actuel respectif sous différents angles, de nouveau partiellement à travers le joint de transition (U) entre deux parties de bande de transport (14, 15) consécutives, les détecteurs (6') - vus dans la direction de poussée - étant agencés du même côté du marquage,
- un dispositif d'évaluation (7) du dispositif de mesure (4), le dispositif d'évaluation (7) permettant de déterminer la taille actuelle respective de la surface de section transversale, à partir de données d'image produites par les détecteurs (6, 6', 6"),
- un dispositif de commande (8) permettant de commander le dispositif de coupe (3) et/ou le dispositif de poussée (2) à l'aide des données concernant la surface de section transversale actuelle, de manière à ce que des portions successives au poids précis soient coupées à partir d'une extrémité avant du boudin de produit alimentaire (9),
**caractérisé par**
- un quatrième détecteur (6") permettant de détecter en continu le marquage actuel également sous un quatrième angle, le quatrième détecteur (6") - vu dans la direction de poussée - étant agencé du côté opposé du marquage - en comparaison avec les trois autres détecteurs (6').

3. Dispositif (1) selon la revendication 2, **caractérisé en ce que** les trois détecteurs (6') agencés d'un côté du marquage sont disposés sur un plan, les trois détecteurs (6') se trouvant de préférence tous sur une trajectoire circulaire (K) s'étendant autour d'un point central (M), deux des trois détecteurs (6') étant également de préférence agencés en-dessous du point central (M) et le troisième détecteur (6') étant agencé au-dessus du point central (M).

4. Dispositif (1) selon la revendication 3, **caractérisé en ce qu'**un angle (α) entre une droite reliant respectivement l'un des détecteurs (6') inférieurs au point central (M) et un plan vertical contenant l'axe longitudinal (10) du boudin de produit alimentaire (9) est compris entre 20° et 60°, de préférence entre 30° et 50°.

5. Dispositif (1) selon la revendication 3 ou 4, **caractérisé en ce qu'**un angle (Y) entre une droite reliant le détecteur (6') agencé au-dessus du point central. (M) au point central (M) de la trajectoire circulaire (K), et une autre droite reliant l'un des détecteurs (6') agencés en-dessous du point central (M) au point central (M), est compris entre 120° et 170°, de préférence entre 140° et 160°.

6. Dispositif (1) selon l'une des revendications 2 à 5, **caractérisé en ce qu'**un axe optique (16) d'au moins un détecteur (6, 6', 6") agencé au-dessus du boudin de produit alimentaire (9), en particulier l'axe optique (16) du quatrième détecteur (6"), forme un angle (δ) entre 20° et 60°, de préférence entre 40° et 50° avec un plan vertical par rapport à la direction de poussée du boudin de produit alimentaire (9) et contenant le marquage.

7. Dispositif (1) selon l'une des revendications 2 à 6, **caractérisé en ce qu'**un axe optique (16) d'au moins un détecteur (6, 6') agencé en-dessous du boudin de produit alimentaire (9) forme un angle (ε) entre 5° et 50°, de préférence entre 10° et 30°, avec un plan vertical par rapport à la direction de poussée du boudin de produit alimentaire (9) et contenant le marquage.

8. Dispositif (1) selon l'une des revendications 2 à 7, **caractérisé en ce que** le quatrième détecteur (6") est agencé dans un plan orienté verticalement et contenant l'axe longitudinal (10) du boudin de produit alimentaire (9).

9. Dispositif (1) selon l'une des revendications 2 à 8, **caractérisé en ce que** le marquage réalisé par le dispositif de marquage (5) est une ligne fermée sur elle-même et périphérique sur la surface du boudin de produit alimentaire (9), la ligne s'étendant de préférence entièrement dans un plan de projection orienté de préférence perpendiculairement à la direction de poussée.
